# EUROPEAN PATENT SPECIFICATION

(11) **EP 1 621 292 B1**
(45) Date of publication and mention of the grant of the patent: **02.04.2008**
(21) Application number: 05105014.4
(22) Date of filing: 08.06.2005
(51) Int. Cl.: B25C 1/18, F16B 19/14

(54) **Piece for fixing objects**
Befestigungsstück zum Befestigen eines Gegenstandes
Pièce de fixation d'un objet

(30) Priority: 30.07.2004 ES 200401933 U
(43) Date of publication of application: 01.02.2006
(73) Proprietor: Ceravalls Pujol, Ramon, 08211 Castellar del Valles (ES); Lopez Puche, Nuria, 08211 Castellar del Valles (ES)
(72) Inventor: Ceravalls Pujol, Ramon, 08211 Castellar del Valles (ES); Lopez Puche, Nuria, 08211 Castellar del Valles (ES)
(74) Representative: Ponti Sales, Adelaida

(56) References cited:
- FR-A- 2 786 541
- GB-A- 1 092 546
- US-A- 5 833 420

## Description

The present invention relates to a piece for fixing objects to a wall or the like, as per the preamble of claim 1. Such a piece is known from US-A-5 833 420.

### BACKGROUND OF THE INVENTION

Pieces which are used as clamps for fixing elements to supports such as walls, roofs and the like, which are fixed by means of tools as nail guns, are known.

Some of these pieces have been designed to be temporarily attached to the end of the outlet mouth of said guns to allow the user to push the piece against the wall by means of the gun before shooting the nail, without having to hold it with both hands. Once the nail has been shot, the gun is detached from the piece, which is already fixed to the wall.

Pieces are known which are provided with a central housing in which the end of the mouth of the gun is introduced. The attachment is carried out by friction between the piece and the outer surface of the end of the mouth of the gun.

The process for placing these pieces in the mouth of the gun is difficult and can involve some risk for the user, as a considerable force has to be exerted to overcome the friction between the piece and the outer surface of the gun. This entails that the user has to carry out a considerable axial force to fix the piece in the end of the gun.

The nail gun has a security mechanism, which only allows shooting a nail if the mouth of the gun has been moved axially until a predetermined position when it is pushed against the wall.

Thus, there is a risk for the user of exerting enough force to move the mouth to the shooting position when he is placing the piece in the mouth, which may cause an accident.

To avoid this inconvenience, clamps have been designed which shape allows coupling them laterally to the mouth of the gun. However, these pieces have to be provided with side flanges, which make more complex the design of the piece. The mouths of the guns have to be provided with perimeter transversal slots for receiving said flanges of the pieces, which increases costs when manufacturing said elements. Moreover, attaching and detaching the piece and the mouth is slower and more complex.

When the piece is fitted onto the mouth, the user has to take care that the flanges are properly fitted into the slot of the mouth, and the operation to place the piece has to be more accurate.

When the piece has been fixed to the wall and the gun has to be withdrawn, the flanges of the piece are housed inside the slot of the mouth, and they do not allow detaching the piece from the gun by means of an axial movement, so the gun has to be moved laterally. In the case that there isn't enough space for operating, the fact of having to move the gun laterally involves, moreover, a new inconvenience.

US-A-5,833,420 discloses an attachment member setting tool and a method of setting the attachment member. The attachment member includes a nail which is driven by a setting tool into the structural component. A connecting region on the guide tube of the setting tool generates a frictional force with a counter-connecting region of a hollow shaft in the attachment member when the nail is driven.

### DESCRIPTION OF THE INVENTION

The aim of the present invention is to solve the disadvantages of the devices known in the art, providing a piece for fixing objects to a wall or the like according to claim 1.

Thanks to these ribs, the piece can be fixed to the mouth of the gun in an easier way, making centering the piece with respect to the axis of the mouth easier, and reducing the force necessary to introduce the mouth into the piece due to the smaller friction surface. Risk of accidental shots.is thus avoided.

Moreover, the piece of the invention can be coupled to any type of mouths of guns, since the ribs can be adapted to smooth or rough surfaces.

According to an alternative embodiment of the present invention, the piece comprises at least three longitudinal radial ribs, each of said ribs being spaced from one another by the same angle.

An equidistant angular separation of the ribs makes centering the piece with respect to the outlet of the mouth of the gun easier, allowing that the nail is driven in the center of the piece.

Preferably, the means for holding the object to be fixed comprise al least a perimeter widow.

These windows allow passing strips or similar elements used to bear the element hold by the piece through them.

According to an embodiment of the present invention, the means for holding the object to be fixed comprise a pair of side arms.

Advantageously, the piece comprises means for receiving the element for fixing the piece to the wall.

According to an embodiment of the invention, the means for receiving the element for fixing the piece to the wall comprise a central cylinder in the base of the piece, said fixing element being placed inside said cylinder.

Thanks to said cylinder, the nail is properly centered, said element also absorbing the impact of the nail and preventing the nail from damaging the wall and its head from piercing the piece.

Advantageously, the attaching means to the inner surface of the mouth comprise ribs, which are longitudinal to the axis of the mouth, in contact with the inner surface of the end of said mouth, said ribs being positioned at the outer surface of the cylinder for receiving the fixing element.

Thus, the piece of the invention can also be fixed by friction to the inner wall of the end of the mouth of the gun.

### BRIEF DESCRIPTION OF THE DRAWINGS

In order to assist the description of all that has been outlined above some drawings are attached which show schematically and solely by way of non-restrictive example a practical case of embodiment of the piece of the invention, in which:
Figure 1 is an elevation view of the piece of the invention;
Figure 2 is a plan view of the piece of the invention;
Figure 3 is a perspective view of the piece of the invention;
Figures 4 to 7 show the attachment of the piece of the invention to the mouth of a nail gun;
Figure 8 is a perspective view of an alternative embodiment of the piece not according to the present invention.

### DESCRIPTION OF A PREFERRED EMBODIMENT

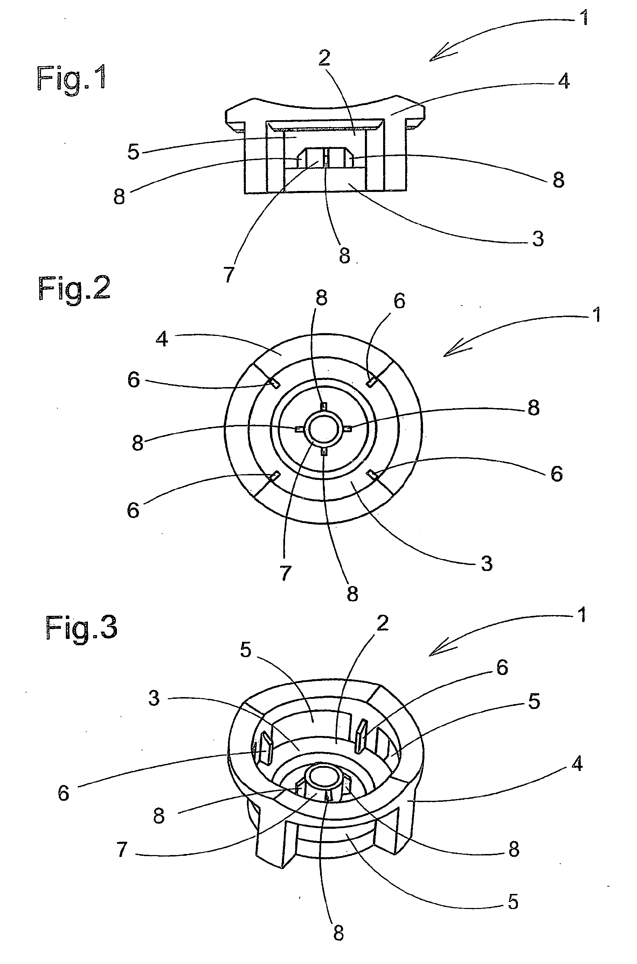

The piece 1 of the invention, as shown in figures 1 to 3, comprises a cylindrical body provided in its central zone with a housing 2 which is opened by its upper part. Said housing 2 is limited by a lower base 3 and is surrounded by a perimeter wall 4.

The wall 4 is provided with windows 5 and ribs 6 which are longitudinal to the axis of the piece 1. Located in the center of the base 2, there is a cylinder 7 whose outer surface is provided with a plurality of longitudinal ribs 8.

The function of the described elements will be explained below.

The piece 1 shown in the figures is intended to be used as a fixing element of an element, such as a pipe or a tube, to a wall. Said piece 1 is fixed to the wall by means of a nail, thus, it is necessary that said piece can be adapted to the use of nail guns.

The nail guns comprise a cylindrical outlet mouth 9 from where the nail is expelled. The piece 1 can be fitted to the outlet mouth 9 of the gun to avoid that the user has to hold it while the gun is actuated.

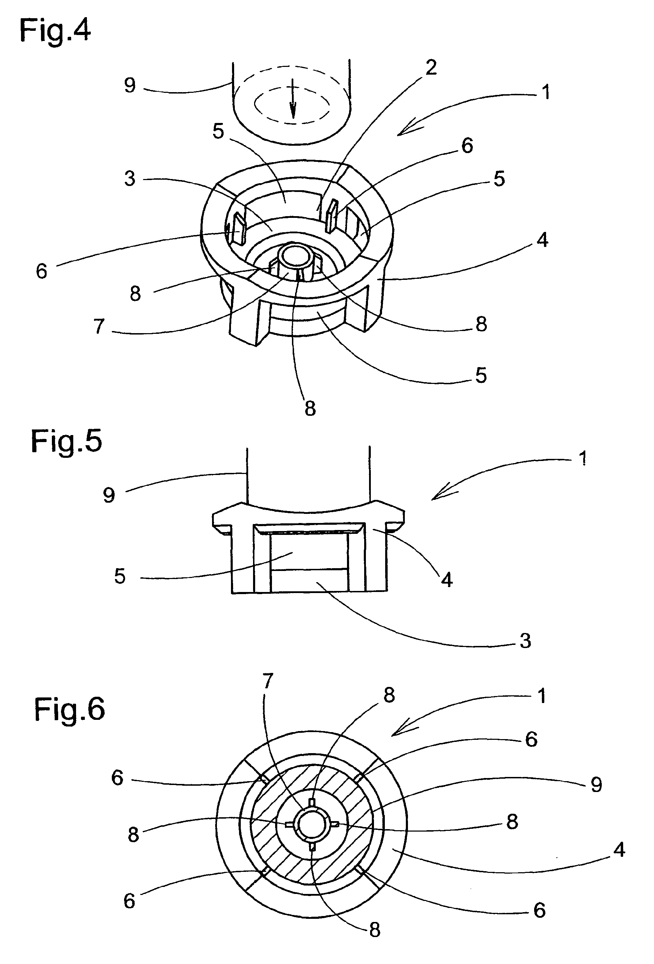

The attachment of the mouth 9 of the gun and the piece 1 of the invention is carried out inserting the end of the mouth 9 inside the housing 2 (figure 4) my means of an axial movement, in such a way that the base 3 of the piece 1 is placed in front of the outlet orifice of the mouth 9 of the gun (figures 5, 6 and 7).

The ribs situated in the wall 4 press against the outer surface of the end of the mouth 9 of the gun, thus, the piece 1 is properly fixed and centered by means of an easy movement.

As it can be seen, the cylinder 7 and the ribs in the center of the base 3 of the piece are placed inside the mouth 9 of the gun. Although in the represented embodiment the inner diameter of the mouth is larger, the ribs 9 may do the same function than the ribs 6 of the wall 4, pressing against the inner surface of the mouth 9 for fixing the piece when the inner diameter of the mouth is smaller.

With the piece attached to the mouth 9 of the gun, the user can push both elements against the wall and shot the nail. Said nail is expelled from the mouth of the gun, piercing the base 3 of the piece 1 until it is driven into the wall, and it is placed inside the cylinder, which also absorbs the impact, preventing the nail from damaging the wall and its head from piercing the piece.

Once the piece1 has been fixed to the wall, it can be used as a support for fixing elements such as strips or pieces that can be coupled to the windows 5, which will hold the element to be supported.

Although the ribs 6 represented in the described embodiment are smooth, they also may consist of a row of small protrusions or any other suitable shape for the intended use.

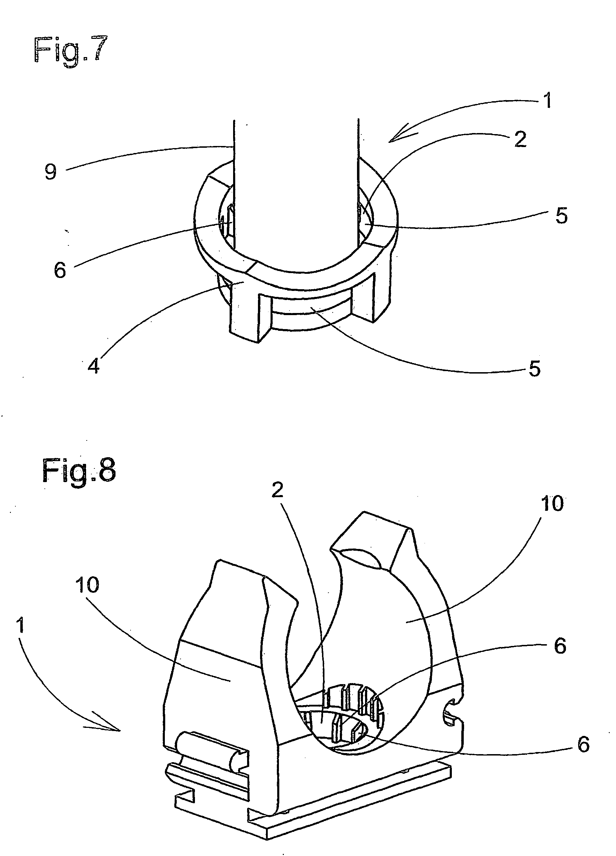

In figure 8 a new embodiment of the piece 1 not according to the invention is shown. In this case, the piece has, like the previously described piece, the longitudinal ribs 6 and the housing 2 for the mouth 9 of the gun. The piece 1 of the embodiment also includes a pair of flexible side arms 10 which allow fixing a pipe in an easy way without having to use accessory elements.

Although two different means for fixing the piece 1 to an object to be supported have been described, said means may also be of the type and shape which can be adapted more suitably to different shapes of said objects.

## Claims

1. Piece (1) for fixing objects to a wall or the like which comprises removable attaching means to the end of the outlet mouth (9) of a tool for propelling an element for fixing the piece to the wall or the like, and means for holding the object to be fixed, the means for attaching the piece (1) to the end of the outlet mouth (9) of the tool comprising at least a rib (6), which is longitudinal to the axis of the mouth (9), in contact with the outer surface of the end of said mouth (9), **characterized in that** said means for attaching the piece (1) to the end of the outlet mouth (9) of the tool also comprise attaching means to the inner surface of the outlet mouth (9) of the tool.

2. Piece (1), according to claim 1, **characterized in that** it comprises at least three longitudinal radial ribs (6), each of said ribs (6) being spaced from one another by the same angle

3. Piece (1), according to claims 1 or 2, **characterized in that** the means for holding the object to be fixed comprise al least a perimeter window (5).

4. Piece (1), according to claims 1 or 2, **characterized in that** the means for holding the object to be fixed comprise a pair of side arms (10).

5. Piece (1), according to claims 1 to 4, **characterized in that** it comprises means for receiving the element for fixing the piece (1) to the wall.

6. Piece, according to claim 5, **characterized in that** the means for receiving the element for fixing the piece (1) to the wall comprise a central cylinder (7) in the base (3) of the piece (1), said fixing element being placed inside said cylinder (7).

7. Piece (1), according to claim 1, **characterized in that** the attaching means to the inner surface of the mouth (9) comprise ribs (8), which are longitudinal to the axis of the mouth (9), in contact with the inner surface of the end of said mouth (9), said ribs (8) being positioned at the outer surface of the cylinder (7) for receiving the fixing element.

## Patentansprüche

1. Befestigungsstück (1) zum Befestigen von Gegenständen an einer Wand oder dergleichen, mit abnehmbaren Aufsteckmitteln zum Aufstecken auf das Ende der Auslassöffnung (9) eines Werkzeuges, das zum Eintreiben eines Elements zum Befestigen des Befestigungsstückes an der Wand oder dergleichen dient, und mit Mitteln zum Halten des zu befestigenden Gegenstandes, wobei das Mittel zum Aufstecken des Befestigungsstückes (1) an dem Ende der Auslassöffnung (9) des Werkzeugs wenigstens eine Rippe (6) aufweist, die in Längsrichtung zu der Achse der Öffnung (9) verläuft und mit der Außenfläche des Endes der Öffnung (9) in Berührung steht, **dadurch gekennzeichnet, dass** dieses Mittel zum Aufstecken des Befestigungsstückes (1) auf das Ende der Auslassöffnung (9) des Werkzeugs auch ein Aufsteckmittel für die Innenseite der Auslassöffnung (9) des Werkzeugs aufweist.

2. Befestigungsstück nach Anspruch 1, **dadurch gekennzeichnet, dass** es wenigstens drei radial verlaufende Längsrippen (6) aufweist, wobei jede dieser Rippen (6) um den gleichen Winkel voneinander beabstandet ist.

3. Befestigungsstück nach den Ansprüchen 1 oder 2, **dadurch gekennzeichnet, dass** das Mittel zum Halten des zu befestigenden Gegenstandes wenigstens ein am Umfang angeordnetes Fenster (5) aufweist.

4. Befestigungsstück nach den Ansprüchen 1 oder 2, **dadurch gekennzeichnet, dass** das Mittel zum Halten des zu befestigenden Gegenstandes ein Paar von Seitenarmen (10) aufweist.

5. Befestigungsstück nach den Ansprüchen 1 bis 4, **dadurch gekennzeichnet, dass** es ein Mittel zur Aufnahme des Elements aufweist, das zum Befestigen des Befestigungsstückes (1) an der Wand dient.

6. Befestigungsstück nach Anspruch 5, **dadurch gekennzeichnet, dass** das Mittel zur Aufnahme des Elements, das zum Befestigen des Befestigungsstückes (1) an der Wand dient, einen mittig angeordneten Zylinder (7) aufweist, der in der Grundplatte (3) des Befestigungsstückes (1) enthalten ist, wobei das Befestigungselement innerhalb des Zylinders (7) angeordnet ist.

7. Befestigungsstück nach Anspruch 1, **dadurch gekennzeichnet, dass** das Aufsteckmittel auf der Innenfläche der Öffnung (9) Rippen (8) aufweist, die in Längsrichtung zu der Achse der Öffnung (9) verlaufen und mit der Innenfläche des Endes der Öffnung (9) in Berührung stehen, wobei diese Rippen (8) auf der Außenseite des Zylinders (7) zur Aufnahme des Befestigungselements angeordnet sind.

## Revendications

1. Pièce (1) pour fixer des objets à un mur ou similaires, comprenant des moyens se rattachant de façon amovible à l'extrémité du bec de sortie (9) d'un outil pour propulser un élément permettant de fixer la pièce au mur ou similaires, et des moyens pour maintenir l'objet à fixer, les moyens pour rattacher la pièce (1) à l'extrémité du bec de sortie (9) de l'outil comprenant au moins une nervure (6) qui est longitudinale par rapport à l'axe du bec (9) en contact avec la surface extérieure de l'extrémité dudit bec (9), **caractérisée en ce que** lesdits moyens pour rattacher la pièce (1) à l'extrémité du bec de sortie (9) de l'outil comprennent également des moyens se rattachant à la surface intérieure du bec de sortie (9) de l'outil.

2. Pièce (1) selon la revendication 1, **caractérisée en ce qu'**elle comprend au moins trois nervures radiales longitudinales (6), chacune desdites nervures (6) étant espacée des autres par le même angle.

3. Pièce (1) selon la revendication 1 ou 2, **caractérisée en ce que** les moyens pour maintenir l'objet à fixer comprennent au moins une fenêtre de périmètre (5).

4. Pièce (1) selon la revendication 1 ou 2, **caractérisée en ce que** les moyens pour maintenir l'objet à fixer comprennent une paire de bras latéraux (10).

5. Pièce (1) selon les revendications 1 à 4, **caractérisée en ce qu'**elle comprend des moyens pour recevoir l'élément pour fixer la pièce (1) au mur.

6. Pièce selon la revendication 5, **caractérisée en ce que** les moyens pour recevoir l'élément permettant de fixer la pièce (1) au mur comprennent un cylindre central (7) dans la base (3) de la pièce (1), ledit élément de fixation étant placé à l'intérieur dudit cylindre (7).

7. Pièce (1) selon la revendication 1, **caractérisée en ce que** les moyens se rattachant à la surface intérieure du bec (9) comprennent des nervures (8) qui sont longitudinales par rapport à l'axe du bec (9), en contact avec la surface intérieure de l'extrémité dudit bec (9), lesdites nervures (8) étant positionnées à la surface extérieure du cylindre (7) pour recevoir l'élément de fixation.
